(19) **Europäisches Patentamt / European Patent Office / Office européen des brevets**

(11) **EP 4 419 327 B1**

(12) **FASCICULE DE BREVET EUROPEEN**

(45) Date de publication et mention
de la délivrance du brevet:
**09.04.2025 Bulletin 2025/15**

(21) Numéro de dépôt: **22809022.1**

(22) Date de dépôt: **21.10.2022**

(51) Classification Internationale des Brevets (IPC):
**B32B 17/10** (2006.01)

(52) Classification Coopérative des Brevets (CPC):
**B32B 17/10036; B32B 17/10174; B32B 17/10293; B32B 17/10348; B32B 17/10889**

(86) Numéro de dépôt international:
**PCT/EP2022/079363**

(87) Numéro de publication internationale:
**WO 2023/067133 (27.04.2023 Gazette 2023/17)**

(54) **VITRAGE FEUILLETÉ BOMBÉ**

GEBOGENE VERBUNDGLASSCHEIBE

CURVED LAMINATED GLAZING

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **22.10.2021 FR 2111262**

(43) Date de publication de la demande:
**28.08.2024 Bulletin 2024/35**

(73) Titulaire: **Saint-Gobain Glass France**
**92400 Courbevoie (FR)**

(72) Inventeurs:
• **JAMART, Juliette**
**92400 Courbevoie (FR)**

• **FRANÇOIS, Adrien**
**93300 Aubervilliers (FR)**
• **THIERY, Thimothée**
**93303 AUBERVILLIERS CEDEX (FR)**
• **BENEDETTO, Alessandro**
**93303 AUBERVILLIERS CEDEX (FR)**
• **LEJEUNE, Antoine**
**92400 Courbevoie (FR)**

(74) Mandataire: **Saint-Gobain Recherche**
**41 Quai Lucien Lefranc**
**93300 Aubervilliers (FR)**

(56) Documents cités:
**WO-A1-2017/106085      WO-A1-2019/147605**

**Description**

L'invention se rapporte au domaine des vitrages feuilletés bombés, en particulier des vitrages pour véhicule automobile, tels que des vitrages pour pare-brise de véhicule automobile.

Les vitrages feuilletés sont des vitrages comprenant deux feuilles de verre liées adhésivement entre elles par un intercalaire thermoplastique. Ce dernier permet en particulier de retenir les éclats de verre en cas de casse, mais apporte aussi d'autres fonctionnalités, en particulier en termes de résistance à l'effraction ou d'amélioration des propriétés acoustiques. De tels vitrages sont notamment utilisés comme pare-brise de véhicules automobiles et sont alors bombés. La feuille de verre disposée du côté convexe, dite feuille externe car destinée à être positionnée à l'extérieur du véhicule, comprend une face traditionnellement appelée « face 1 » (à l'extérieur du véhicule) et une face 2 en contact avec l'intercalaire de feuilletage, et la feuille de verre disposée du côté concave, dite feuille interne, comprend une face 3 en contact avec l'intercalaire de feuilletage et une face 4, opposée à l'intercalaire de feuilletage, et destinée à être positionnée à l'intérieur du véhicule.

Ces vitrages feuilletés comprennent généralement des couches d'émail, qui permettent par exemple de dissimuler des joints de montage du vitrage dans une baie de carrosserie d'un véhicule et également de les protéger contre le rayonnement ultraviolet. La couche d'émail, souvent disposée en face 2 ou en face 4, est généralement sous forme d'une bande disposée à la périphérie de la feuille de verre.

On entend par couche d'émail un revêtement obtenu par dépôt et cuisson d'une composition d'émail, laquelle comprend une fritte de verre et des pigments, souvent des pigments noirs. Déposée généralement par sérigraphie, la couche d'émail est ensuite cuite lors du bombage, dans lequel on soumet les feuilles de verre des températures d'au moins 550°C, voire d'au moins 600°C. Ce traitement est mis en œuvre dans des dispositifs de chauffage tels que des fours, dans lesquels les feuilles de verre sont chauffées par convection et rayonnement.

Il a été observé que les vitrages feuilletés bombés présentaient dans certains cas des distorsions optiques, parfois appelées « *burn lines* », à proximité de la zone émaillée.

Ces distorsions sont particulièrement gênantes lorsqu'elles se situent près des zones, dites « zones caméra », au travers desquelles des capteurs optiques doivent capter la lumière ou des images. C'est le cas par exemple des pare-brise munis de capteurs et/ou de caméras, par exemple des capteurs de pluie ou de luminosité, ou des caméras d'aide à la conduite. Ces capteurs ou caméras sont situés à l'intérieur du véhicule, contre la face 4 du vitrage, par exemple dans la zone où le rétroviseur intérieur est fixé au pare-brise. Un revêtement d'émail est généralement disposé dans cette zone afin de dissimuler et protéger l'adhésif servant à fixer le rétroviseur intérieur, mais cette zone émaillée doit ménager une petite fenêtre de transmission non émaillée de façon à ce que la lumière puisse atteindre les capteurs. Il est important que cette zone caméra ait un niveau de distorsions optiques le plus faible possible afin que l'image captée soit peu déformée et donc plus facilement analysée.

WO2019147605 Al décrit un vitrage de véhicule ayant une ouverture imprimée d'émail opaque pour un système d'acquisition d'informations et une source d'assombrissement à l'intérieur de l'ouverture imprimée d'émail opaque pour réduire la distorsion de transmittance optique.

L'invention a pour but de proposer des vitrages émaillés présentant une faible distorsion optique.

A cet effet, l'invention a pour objet un vitrage feuilleté bombé, notamment pour pare-brise de véhicule automobile, comprenant une première feuille de verre disposée du côté convexe du vitrage et liée adhésivement au moyen d'un intercalaire de feuilletage à une deuxième feuille de verre disposée du côté concave du vitrage, ladite première feuille de verre comprenant une face dite face 2 tournée vers ledit intercalaire de feuilletage et ladite deuxième feuille de verre comprenant une face dite face 4 opposée audit intercalaire de feuilletage, dans lequel ladite face 2 ou ladite face 4 comprend une zone recouverte d'une couche d'émail, dite zone émaillée, qui comprend une première zone ayant la forme d'une bande périphérique et une deuxième zone ménageant au moins une fenêtre de transmission, le coefficient de dilatation thermique linéaire entre 20 et 300°C de la couche d'émail dans ladite deuxième zone étant compris dans un domaine allant de $10,5.10^{-6}$/K à $12,5.10^{-6}$/K.

L'invention a aussi pour objet un procédé d'obtention d'un tel vitrage feuilleté bombé. Ce procédé comprend les étapes suivantes :

- fourniture d'une première feuille de verre et d'une deuxième feuille de verre

- dépôt, sur une zone, dite zone émaillée, d'une face dite face 2 de la première feuille de verre ou d'une face dite face 4 de la deuxième feuille de verre, d'une couche d'émail, ladite zone émaillée comprenant une première zone ayant la forme d'une bande périphérique et au moins une deuxième zone ménageant au moins une fenêtre de transmission, puis

- bombage des première et deuxième feuilles de verre, de sorte à ce que la zone émaillée se trouve du côté concave de la feuille de verre qui la porte, puis

- feuilletage de la première et de la deuxième feuille de verre au moyen d'un intercalaire de feuilletage de sorte à ce que la deuxième feuille de verre se trouve du côté concave du vitrage, à ce que la face 2 soit tournée vers ledit intercalaire de feuilletage et à ce que la face 4 soit opposée audit intercalaire de feuilletage.

Les inventeurs ont pu mettre en évidence que le choix d'un émail présentant un coefficient de dilatation inhabituellement élevé permettait de réduire les distorsions optiques.

Les feuilles de verre du vitrage selon l'invention sont de préférence en verre silico-sodo-calcique. Le verre silico-sodo-calcique comprend de préférence 65-80% en poids de $SiO_2$, 5-15% en poids de CaO et 10-20% en poids de $Na_2O$. Le verre silico-sodo-calcique présente généralement un coefficient de dilatation thermique linéaire entre 20 et 300°C d'environ $8,9.10^{-6}$/K, donc sensiblement plus faible que le coefficient de dilatation de l'émail dans la deuxième zone. L'utilisation d'un émail à coefficient de dilatation élevé va à l'encore de l'usage courant, qui est d'utiliser des émaux présentant un coefficient de dilatation thermique proche de celui du substrat afin d'éviter sa fragilisation mécanique.

Les feuilles de verre sont avantageusement obtenues par flottage. La première et/ou la deuxième feuille de verre peut être en verre clair ou en verre teinté, de préférence en verre teinté, par exemple en vert, gris ou bleu. Pour ce faire, la composition chimique de la feuille de verre en question comprend avantageusement de l'oxyde de fer, en une teneur pondérale allant de 0,5 à 2%. Elle peut également comprendre d'autres agents colorants, tels que l'oxyde de cobalt, l'oxyde de chrome, l'oxyde de nickel, l'oxyde d'erbium, ou encore le sélénium. Dans le cas préféré d'un pare-brise de véhicule automobile, la transmission lumineuse du vitrage (illuminant A, observateur de référence CIE-1931) est de préférence d'au moins 70%, voire 75% ; au moins une feuille de comprend alors de préférence une teneur en oxyde de fer (exprimée sous la forme $Fe_2O_3$) comprise entre 0,5 et 0,9% en poids.

La première et/ou la deuxième feuille de verre présente une épaisseur de préférence comprise entre 0,7 et 5 mm, notamment entre 1 et 4 mm, voire entre 1,5 et 3 mm.

Les dimensions latérales de chaque feuille de verre sont à adapter en fonction de celles du vitrage feuilleté auquel elle est destinée à être intégrée. Le vitrage présente de préférence une surface d'au moins 1 $m^2$.

Chaque feuille de verre est généralement plane lors du dépôt de la couche d'émail. Les feuilles de verre sont ensuite bombées, séparément ou ensemble, avant l'étape de feuilletage, et possèdent donc une forme bombée dans le vitrage final.

Dans une application en tant que pare-brise de véhicule automobile, la première feuille de verre correspond à la feuille externe du vitrage, disposée du côté convexe, et destinée à être positionnée à l'extérieur du véhicule. La deuxième feuille de verre correspond à la feuille interne, disposée du côté concave, et destinée à être positionnée à l'intérieur du véhicule.

La zone émaillée est de préférence sur la face 2. On entend par zone émaillée la totalité de la zone qui est recouverte d'émail, étant entendu que la couche d'émail peut comprendre plusieurs zones, la composition chimique de l'émail pouvant être différente selon les zones, comme expliqué plus en détail dans la suite du texte. Dit autrement, la couche d'émail peut ne pas être homogène en composition selon les zones.

La zone émaillée représente de préférence entre 2 et 25%, notamment entre 3 et 20%, voire entre 5 et 15% de la surface de la face 2 ou de la face 4.

La couche d'émail est de préférence noire et opaque, sa clarté L* mesurée en réflexion côté verre étant de préférence inférieure à 10, notamment à 5, voire à 3. La mesure est réalisée par exemple à l'aide d'un spectrocolorimètre, et le calcul est réalisé en prenant en considération l'illuminant D65 et l'observateur de référence CIE 1964 (10°).

La zone émaillée comprend une première zone ayant la forme d'une bande périphérique. Par « bande périphérique », on entend une bande qui, du bord périphérique de la feuille de verre, ou de la proximité immédiate de ce bord, s'étend vers l'intérieur de la feuille de verre sur une certaine largeur, typiquement comprise entre 1 et 30 cm, largeur qui peut être différente selon les zones du vitrage. La largeur peut par exemple être plus élevée dans la partie inférieure du vitrage (en position d'utilisation) que dans les parties latérales. La bande périphérique est de préférence refermée sur elle-même, c'est-à-dire qu'elle occupe la totalité de la périphérie de la (première ou deuxième) feuille de verre. Comme expliqué précédemment, cette bande périphérique a pour but principal de dissimuler et/ou protéger divers éléments, notamment les joints de montage du vitrage dans la baie de carrosserie du véhicule.

La zone émaillée comprend en outre une deuxième zone ménageant au moins une fenêtre de transmission. La deuxième zone entoure généralement au moins une, éventuellement plusieurs (par exemple deux ou trois), fenêtre(s) de transmission. On appelle généralement « zone caméra » la fenêtre de transmission, et éventuellement la zone d'émail qui l'entoure. La fenêtre de transmission, et donc également la deuxième zone, est située typiquement dans une partie centrale supérieure du vitrage en situation d'utilisation, c'est-à-dire monté dans le véhicule automobile. Dans cette zone, l'émail de la deuxième zone permet généralement, en outre, de cacher l'embase du rétroviseur intérieur ainsi que les composants électroniques des capteurs ou caméras.

La ou chaque fenêtre de transmission est de préférence complètement entourée par la deuxième zone couche d'émail. La surface de la fenêtre de transmission, ou les cas échéant la somme des surfaces de chaque fenêtre de transmission est de préférence comprise entre 5 et 300 $cm^2$, notamment entre 10 et 250 $cm^2$. La fenêtre de transmission présente de préférence une forme trapézoïdale.

La deuxième zone représente de préférence entre 1 et 10%, notamment entre 2 et 5%, de la surface de la face 2 ou de la face 4.

De préférence, le vitrage comprend en outre au moins un capteur disposé en regard de la ou de chaque fenêtre de transmission. Le au moins un capteur est par exemple une caméra (notamment visible et/ou infrarouge, en particulier proche infrarouge ou thermique) ou un Lidar. Dans le cas d'un Lidar, pour lequel une transmission très élevée dans le proche infrarouge est nécessaire, la deuxième feuille de verre et/ou l'intercalaire de feuilletage (ou au moins un pli de cet intercalaire lorsque ce dernier en comprend plusieurs) peut comprendre un trou en regard du Lidar, ou la composition des feuilles de verre peut être adaptée pour présenter une transmission élevée dans le domaine du proche infrarouge, notamment en réduisant la teneur en fer ferreux dans le verre.

La face 2, en dehors le cas échéant de la zone émaillée, est généralement non-revêtue (le verre est alors nu, dans les parties qui ne sont pas émaillées). Alternativement, la face 2 peut être revêtue, le cas échéant sous la couche d'émail, par un revêtement basémissif, notamment comprenant au moins une couche mince d'argent, qui permet d'améliorer le confort thermique ou de réduire la consommation destinée au chauffage ou à la climatisation de l'habitacle, ou encore, lorsque des amenées de courant sont prévues, de procurer une fonction de chauffage, utile par exemple pour dégivrer ou désembuer le vitrage. Un tel revêtement est toutefois préférentiellement prévu en face 3 du vitrage.

La couche d'émail est de préférence au contact direct de la première ou de la deuxième feuille de verre, selon qu'elle se trouve sur la face 2 ou la face 4 du vitrage.

L'épaisseur de la couche d'émail est de préférence comprise entre 5 et 50 $\mu$m, notamment entre 7 et 30 $\mu$m. Il s'agit ici de l'épaisseur de la couche finale, après cuisson (laquelle a généralement lieu lors du bombage).

La couche d'émail est de préférence obtenue à partir d'une composition d'émail fluide comprenant une fritte de verre, des pigments et un médium organique. Ce dernier est éliminé lors de l'étape de bombage, laquelle permet de consolider le revêtement d'émail, voire le cas échéant lors d'un traitement de pré-cuisson de l'émail. Après cuisson, la couche d'émail comprend donc des pigments dans une matrice essentiellement vitreuse ou vitro-cristalline ayant sensiblement la même composition chimique que celle de la fritte de départ.

Les pigments comprennent de préférence un ou plusieurs oxydes choisis parmi les oxydes de chrome, de cuivre, de fer, de manganèse, de cobalt et de nickel. Il peut s'agir à titre d'exemple de chromates de cuivre et/ou de fer.

La fritte de verre est de préférence à base de borosilicate de bismuth, voire de borosilicate de bismuth et de zinc, ou encore à base de borate de bismuth et de zinc. Afin d'augmenter le coefficient de dilatation thermique de l'émail et d'atteindre les valeurs revendiquées, il est possible de jouer sur la composition de la fritte de verre, et donc de la matrice essentiellement vitreuse. Tous les détails donnés quant à la composition de la fritte valent donc également pour la matrice essentiellement vitreuse ou vitro-cristalline. Il est également possible d'ajouter à l'émail des particules minérales à fort coefficient de dilatation. En particulier dans les frittes à base de borosilicate de bismuth, la silice réduit le coefficient de dilatation, de même que, dans une moindre mesure, l'oxyde de bore et l'alumine. En revanche, les oxydes alcalins augmentent fortement le coefficient de dilatation ($K_2O$ étant plus efficace que $Na_2O$, lui-même plus efficace que $Li_2O$), de même que, dans une moindre mesure les oxydes alcalino-terreux (dans l'ordre d'efficacité CaO, puis SrO puis BaO) et l'oxyde de bismuth. Par rapport aux frittes utilisées habituellement, dont le coefficient de dilatation thermique est plus proche de celui du verre silico-sodo-calcique, il est donc possible de régler le coefficient de dilatation en réduisant dans la fritte la part des oxydes qui diminuent le coefficient de dilatation et en augmentant la part des oxydes qui augmentent le coefficient de dilatation. La teneur molaire en $Bi_2O_3$ dans la fritte est de préférence d'au moins 25%, voire d'au moins 26%, notamment comprise entre 26 et 60%. La teneur molaire en $SiO_2$ dans la fritte est de préférence d'au plus 25%, notamment d'au plus 20%, voire d'au plus 15% et même d'au plus 10%. La teneur en $B_2O_3$ dans la fritte est de préférence d'au moins 5%, notamment comprise entre 10 et 30%. La teneur molaire en ZnO dans la fritte est de préférence comprise entre 5 et 35%. La teneur molaire totale en oxydes alcalins ($Li_2O+Na_2O+K_2O$) est de préférence comprise entre 2 et 20%, notamment entre 5 et 15%. A titre d'exemple la fritte de verre peut comprendre en moles 6,3% $SiO_2$, 0,4% $Al_2O_3$, 19,6% $B_2O_3$, 29% ZnO, 13% $Na_2O$ et 31,7% $Bi_2O_3$, ou encore 8,8% $SiO_2$, 26,1% $B_2O_3$, 17,8% ZnO, 4,3% $Na_2O$ et 43,4% $Bi_2O_3$.

Le coefficient de dilatation thermique linéaire entre 20 et 300°C de la couche d'émail dans la deuxième zone est de préférence compris dans un domaine allant de $11,0.10^{-6}$ / K à $12,0.10^{-6}$/K.

Le coefficient de dilatation est celui de la couche d'émail, et non celui de la fritte de verre de la composition d'émail.

Le coefficient de dilatation de la couche d'émail est déterminé comme suit.

La couche d'émail est déposée et cuite sur au moins deux (de préférence au moins trois) substrats de verre mince (épaisseur de préférence entre 200 et 800 $\mu$m, notamment entre 500 et 800 $\mu$m) ayant des coefficients de dilatation thermique linéaires différents, de préférence encadrant le coefficient de dilatation estimé pour l'émail. De préférence, les substrats de verre ont un coefficient de dilatation thermique linéaire (entre 20 et 300°C) d'au moins $5,0.10^{-6}$/K.

Les échantillons sont ensuite portés à une température de 300°C puis refroidis naturellement jusqu'à la température ambiante. La courbure des échantillons est mesurée pendant ce refroidissement entre 300°C et l'ambiante, par exemple par déflectométrie à décalage de phase. Ces méthodes connues utilisent la réflexion d'une mire par l'échantillon.

La contrainte résiduelle dans la couche d'émail ($\sigma_{film}$) est calculée en fonction de la température selon la formule suivante (dite formule de Stoney), dans laquelle E et v sont respectivement le module de Young et le coefficient de Poisson du substrat de verre, $t_{sub}$ son épaisseur, $t_f$ est l'épaisseur de la couche d'email et 1/R est la courbure.

[Math.1]

$$\sigma_{film} = \frac{1}{6}\left(\frac{E}{1-v}\right)_{sub} \cdot \frac{t_{sub}^2}{t_f} \cdot \left(\frac{1}{R}\right)$$

La contrainte résiduelle dans la couche d'émail est induite par la différence entre son coefficient de dilatation et celui du substrat de verre, la pente de la courbe contrainte/ température étant donnée par l'équation suivante, dans laquelle $\alpha_{sub}$ et $\alpha_{film}$ sont respectivement le coefficient de dilatation thermique linéaire du substrat de verre et de la couche d'émail et $(E/(1-v))_{film}$ est le module élastique biaxial de la couche d'émail :

[Math.2]

$$\frac{\Delta\sigma_{film}}{\Delta T} = \left(\frac{E}{1-v}\right)_{film}\left(\alpha_{sub} - \alpha_{film}\right)$$

Le coefficient de dilatation de la couche d'émail correspond donc au point où la courbe reliant la pente de la contrainte résiduelle et le coefficient de dilatation du substrat intercepte l'axe des abscisses.

Selon un mode de réalisation, la couche d'émail présente le même coefficient de dilatation thermique linéaire entre 20 et 300°C dans toute la zone émaillée. Dit autrement, l'émail est le même dans toute la zone émaillée, dans la première comme dans la deuxième zone. Ce mode de réalisation facilite la production industrielle du vitrage, puisque la couche d'émail peut être déposée en une seule étape. Comme indiqué précédemment, le coefficient de dilatation élevé de l'émail, sensiblement plus élevé que celui du verre, provoque toutefois un risque de fragilisation mécanique du verre.

Selon un autre mode de réalisation, qui permet de réduire ce risque de fragilisation, le coefficient de dilatation thermique linéaire entre 20 et 300°C de la couche d'émail dans la première zone est inférieur au coefficient de dilatation thermique linéaire entre 20 et 300°C de la couche d'émail dans la deuxième zone. De préférence, le coefficient de dilatation thermique linéaire entre 20 et 300°C de la couche d'émail dans la première zone est inférieur à $10,0.10^{-6}$/K, notamment compris entre 8,0 et $9,5. 10^{-6}$/K. L'émail utilisé dans la première zone est donc différent de celui utilisé dans la deuxième zone.

La couche d'émail est de préférence déposée par sérigraphie et/ou par impression numérique.

Dans la technique de sérigraphie, on dépose, notamment à l'aide d'un racle, la composition d'émail sur la feuille de verre au travers de mailles d'un écran de sérigraphie. Les mailles de l'écran sont obturées dans la partie correspondant aux zones de la feuille de verre que l'on ne veut pas revêtir, de sorte que la composition d'émail ne peut passer au travers de l'écran que dans les zones à imprimer, selon un motif prédéfini. Les techniques d'impression numérique sont par exemple l'impression par jet d'encre ou par transfert sous l'effet d'un rayonnement laser.

Lorsque la composition de l'émail est la même dans toute la zone émaillée, la sérigraphie peut être réalisée en une étape. En revanche, lorsque la composition de l'émail diffère selon la zone (l'émail utilisé dans la première zone étant différent de celui utilisé dans la deuxième zone), la sérigraphie doit être réalisée en deux étapes, séparées de préférence par une étape de séchage. Dans le cas d'un dépôt par impression numérique, il est possible dans ce cas de déposer l'émail dans les deux zones en une seule étape, en utilisant par exemple deux buses. Il est aussi possible d'utiliser deux techniques de dépôts différentes en fonction de la zone : par exemple l'émail peut être déposé par sérigraphie dans la première zone et par impression numérique dans la deuxième zone. Dans ce cas, la couche d'émail est déposée à la fois par sérigraphie et par impression numérique.

Le dépôt de la couche d'émail peut être suivi d'une étape de pré-cuisson. Ce traitement met en œuvre des températures de préférence comprises entre 550 et 650°C, notamment entre 560 et 600°C. Le traitement de pré-cuisson est en particulier utile pour développer les propriétés anti-adhésion de certains émaux. La cuisson finale de l'émail a lieu généralement durant l'étape de bombage.

Le vitrage feuilleté est bombé. Pour ce faire, les deux feuilles de verre sont bombées, soit séparément, soit, de préférence, ensemble.

Le bombage peut notamment être réalisé par exemple par gravité (le verre se déformant sous son propre poids) ou par pressage, à des températures allant typiquement de 550 à 650°C. Pour éviter que les feuilles de verre ne collent l'une à l'autre pendant le bombage, les feuilles de verre sont de préférence maintenues à distance en disposant entre elles une poudre intercalaire assurant un espace de quelques dizaines de micromètres, typiquement de 20 à 50 $\mu$m. La poudre intercalaire est par exemple à base de carbonate de calcium et/ou de magnésium.

Lors du bombage, la deuxième feuille de verre (destinée à être positionnée à l'intérieur de l'habitacle) est normalement placée au-dessus de la première feuille de verre. La face 4 se retrouve alors tout en haut de l'assemblage, la face 2 se trouvant au contact de la deuxième feuille de verre (éventuellement séparée par la poudre intercalaire).

Afin d'aider à réduire les distorsions optiques, il est possible de déposer, sur l'une des feuilles de verre, au moins au niveau de la fenêtre de transmission, et de préférence au niveau de la zone englobant la fenêtre de transmission et au moins une partie de la deuxième zone, une couche sacrificielle, éliminée soit lors du bombage soit après l'étape de bombage. La couche sacrificielle peut être déposée directement sur la face comprenant la zone émaillée, ou, lorsque les deux feuilles de verre sont bombées ensemble, sur l'autre feuille de verre, mais toujours au niveau de la fenêtre de transmission, voire de la deuxième zone. Une telle couche sacrificielle peut être déposée par sérigraphie, impression numérique, par tampographie, au rouleau, au rideau ou par pulvérisation. Avantageusement, La couche sacrificielle absorbe une partie du rayonnement infrarouge, afin d'homogénéiser la température subie par les feuilles de verre au niveau des zones émaillées et non émaillées. La couche sacrificielle peut notamment comprendre des pigments, notamment des pigments noirs, ou du noir de carbone. La couche sacrificielle peut comprendre une résine et des composés minéraux réfractaires, l'élimination de la couche sacrificielle étant réalisée après l'étape de bombage, notamment par lavage et/ou brossage. Alternativement, la couche sacrificielle peut comprendre une résine et des composés minéraux combustibles, l'élimination de la couche sacrificielle étant réalisée simultanément avec le bombage.

L'étape de feuilletage peut être réalisée par un traitement en autoclave, par exemple à des températures de 110 à 160°C et sous une pression allant de 10 à 15 bars. Préalablement au traitement en autoclave, l'air emprisonné entre les feuilles de verre et l'intercalaire de feuilletage peut être éliminé par calandrage ou par dépression.

L'intercalaire de feuilletage comprend de préférence au moins une feuille de polyvinylacétal, notamment de polyvinylbutyral (PVB).

L'intercalaire de feuilletage peut être teinté ou non-teinté afin si nécessaire de réguler les propriétés optiques ou thermiques du vitrage.

L'intercalaire de feuilletage peut avantageusement posséder des propriétés d'absorption acoustique afin d'absorber les sons d'origine aérienne ou solidienne. Il peut notamment être constitué à cet effet de trois feuilles polymériques, dont deux feuilles de PVB dites externes encadrant une feuille polymérique interne, éventuellement en PVB, de dureté plus faible que celle des feuilles externes.

L'intercalaire de feuilletage peut également posséder des propriétés d'isolation thermique, en particulier de réflexion du rayonnement infrarouge. Il peut à cet effet comprendre un revêtement de couches mince à faible émissivité, par exemple un revêtement comprenant une couche mince d'argent ou un revêtement alternant des couches diélectriques d'indices de réfractions différents, déposé sur une feuille de PET interne encadrée par deux feuilles de PVB externes.

L'épaisseur de l'intercalaire de feuilletage est généralement comprise dans un domaine allant de 0,3 à 1,5 mm, notamment de 0,5 à 1 mm. L'intercalaire de feuilletage peut présenter une épaisseur plus faible sur un bord du vitrage qu'au centre du vitrage afin d'éviter la formation d'une double image en cas d'utilisation d'un système de vision tête haute, dit HUD (head-up display).

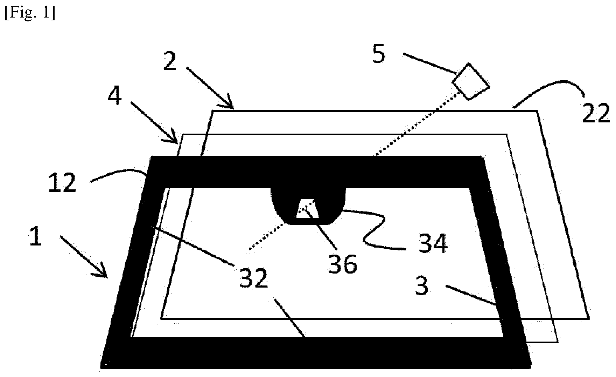

La [Fig.1] et les exemples qui suivent illustrent l'invention de manière non-limitative.

[Fig.1] est une vue schématique en éclaté des constituants d'un exemple non-limitatif de vitrage feuilleté selon l'invention.

Le pare-brise représenté comprend une première feuille de verre 1, une deuxième feuille de verre 2 et un intercalaire de feuilletage 4. La face 1 de ce qui deviendra le vitrage feuilleté (face destinée à être positionnée à l'extérieur du véhicule automobile) est représentée à l'avant de la première feuille de verre 1. La face 2, notée 12, est donc la face arrière de la première feuille de verre 1. Elle est, dans le vitrage feuilleté, en contact avec l'intercalaire de feuilletage 4. La face 4, notée 22 (face destinée à être positionnée à l'intérieur du véhicule automobile) est également la face arrière de la deuxième feuille de verre 2.

La face 2, notée 12, comprend une zone recouverte d'une couche d'émail 3, laquelle comprend une première zone 32 ayant la forme d'une bande périphérique et une deuxième zone 34 ménageant une fenêtre de transmission 36, de forme trapézoïdale. Le vitrage comprend en outre un capteur 5 disposé en regard de la fenêtre de transmission 36.

La couche d'émail est ici visible par transparence au travers de la feuille de verre 1 puisqu'elle est déposée sur une faces représentée « derrière » la feuille de verre sur la figure.

Le coefficient de dilatation thermique linéaire de la couche d'émail a été déterminé par la méthode précédemment décrite, en utilisant trois substrats de verre de 700 $\mu$m d'épaisseur : un verre borosilicate (Schott D 263® T) possédant un coefficient de dilatation thermique de $7,2.10^{-6}$/K, un module de Young de 73 GPa et un coefficient de Poisson de 0,208, un verre silico-sodo-calcique possédant un coefficient de dilatation thermique de $8,7.10^{-6}$/K, un module de Young de 70 GPa et un coefficient de Poisson de 0,22 et un verre, et un verre d'aluminosilicate d'alcalins possédant un coefficient de dilatation thermique de $10,8.10^{-6}$/K, un module de Young de 67 GPa et un coefficient de Poisson de 0,23, dont la composition chimique pondérale comprend 61,5% $SiO_2$, 8% $Al_2O_3$, 12,5% $Na_2O$, 9,27% $K_2O$, 8% $MgO$ et 0,3% $CaO$. D'autres types de verre peuvent bien entendu être utilisés, et l'on peut notamment citer le verre d'aluminosilicate Asahi Dragontail®, ayant un coefficient de dilatation de $9,8.10^{-6}$/K, un module de Young de 74 GPa et un coefficient de Poisson de 0,23. La dimension des éprouvettes était de 1*7 cm$^2$.

Dans une première série d'essais, deux compositions d'émail ont été comparées quant à leur effet sur la distorsion optique.

Des feuilles de verre silico-sodo-calcique clair de 2,1 mm d'épaisseur ont été revêtues par sérigraphie d'une couche d'émail formant une fenêtre de transmission. Après séchage, puis pré-cuisson à 570°C pendant 120 secondes, l'émail a été cuit à 600°C pendant 220 secondes. Pour chaque émail, deux épaisseurs ont été testées : 7 μm et 15 μm (après cuisson). Les feuilles de verre ont ensuite été feuilletés avec une autre feuille de verre silico-sodo-calcique de 2,1 mm d'épaisseur à l'aide d'une feuille de PVB.

Dans un essai comparatif, l'émail utilisé présentait un coefficient de dilatation thermique linéaire de 8,5.10$^{-6}$/K. La distorsion obtenue était de -40 millidioptries pour une épaisseur de 15 μm et de -65 milliodioptries pour une épaisseur de 7 μm. Dans un essai selon l'invention, l'émail présentait un coefficient de dilatation thermique linéaire de 11,0.10$^{-6}$/K. La distorsion obtenue était de -20 milliodioptries (pour les deux épaisseurs testées).

Dans une deuxième série d'essais, quatre compositions d'émail ont été comparées quant à leur effet sur la déformation du verre. Des éprouvettes de verre silico-sodo-calcique de 2,1 mm d'épaisseur ont été revêtues par sérigraphie sur toute leur face d'une couche d'émail ayant une épaisseur de 7 μm après cuisson.

Après traitement thermique à 610°C pendant 200 secondes, les éprouvettes étant suspendues verticalement, la courbure induite par le traitement thermique a été mesurée à l'aide d'un profilomètre.

Le tableau 1 ci-après indique pour chaque émail testé son coefficient de dilatation thermique linéaire (noté α) et la courbure mesurée.

[Tableaux1]

| Email | 1 | 2 | 3 | 4 |
|---|---|---|---|---|
| α (.10$^6$/K) | 7,1 | 8,5 | 9,6 | 11,0 |
| Courbure (m$^{-1}$) | 0,035 | 0,020 | 0,022 | 0,005 |

La déformation engendrée par l'émail est donc plus faible lorsque le coefficient de dilatation thermique linéaire se situe dans la gamme allant de 10,5 à 12,5.10$^{-6}$/K.

## Revendications

1. Vitrage feuilleté bombé, notamment pour pare-brise de véhicule automobile, comprenant une première feuille de verre (1) disposée du côté convexe du vitrage et liée adhésivement au moyen d'un intercalaire de feuilletage (4) à une deuxième feuille de verre (2) disposée du côté concave du vitrage, ladite première feuille de verre (1) comprenant une face (12) dite face 2 tournée vers ledit intercalaire de feuilletage et ladite deuxième feuille de verre (2) comprenant une face (22) dite face 4 opposée audit intercalaire de feuilletage, dans lequel ladite face 2 (12) ou ladite face 4 (22) comprend une zone recouverte d'une couche d'émail (3), dite zone émaillée (32, 34), qui comprend une première zone (32) ayant la forme d'une bande périphérique et une deuxième zone (34) ménageant au moins une fenêtre de transmission (36), le coefficient de dilatation thermique linéaire entre 20 et 300°C (tel que déterminé par la méthode décrite dans la description) de la couche d'émail dans ladite deuxième zone (34) étant compris dans un domaine allant de 10,5.10$^{-6}$/K à 12,5.10$^6$/K.

2. Vitrage selon la revendication précédente, tel que la couche d'émail (3) est noire et opaque, sa clarté L* mesurée en réflexion côté verre étant de préférence inférieure à 10.

3. Vitrage selon l'une des revendications précédentes, dans lequel la deuxième zone (34) représente entre 1 et 10%, notamment entre 2 et 5%, de la surface de la face 2 (12) ou de la face 4 (22).

4. Vitrage selon l'une des revendications précédentes, dans lequel la surface de la fenêtre de transmission (36), ou les cas échéant la somme des surfaces de chaque fenêtre de transmission (36) est comprise entre 5 et 300 cm$^2$, notamment entre 10 et 250 cm$^2$.

5. Vitrage selon l'une des revendications précédentes, dans lequel l'épaisseur de la couche d'émail (3) est comprise entre 5 et 50 μm, notamment entre 7 et 30 μm.

6. Vitrage selon l'une des revendications précédentes, dans lequel la fenêtre de transmission (36) est située dans une partie centrale supérieure du vitrage en situation d'utilisation.

7. Vitrage selon l'une des revendications précédentes, dans lequel le coefficient de dilatation thermique linéaire entre 20 et 300°C de la couche d'émail (3) dans la deuxième zone (34) est compris dans un domaine allant de $11,0.10^{-6}$/K à $12,0.10^6$/K.

8. Vitrage selon l'une des revendications précédentes, dans lequel le coefficient de dilatation thermique linéaire entre 20 et 300°C de la couche d'émail (3) dans la première zone (32) est inférieur au coefficient de dilatation thermique linéaire entre 20 et 300°C de la couche d'émail (3) dans la deuxième zone (34).

9. Vitrage selon la revendication précédente, dans lequel le coefficient de dilatation thermique linéaire entre 20 et 300°C de la couche d'émail (3) dans la première zone (32) est inférieur à $10,0.10^{-6}$/K.

10. Vitrage selon l'une des revendications 1 à 7, dans lequel la couche d'émail (3) présente le même coefficient de dilatation thermique linéaire entre 20 et 300°C dans toute la zone émaillée (32, 34).

11. Vitrage selon l'une des revendications précédentes, comprenant en outre au moins un capteur (5) disposé en regard de la ou de chaque fenêtre de transmission (36).

12. Vitrage selon la revendication précédente, dans lequel le au moins un capteur (5) est une caméra ou un Lidar.

13. Procédé d'obtention d'un vitrage feuilleté bombé selon l'une des revendications précédentes, comprenant les étapes suivantes :

- fourniture d'une première feuille de verre (1) et d'une deuxième feuille de verre (2)
- dépôt, sur une zone, dite zone émaillée (32, 34), d'une face (12) dite face 2 de la première feuille de verre ou d'une face (22) dite face 4 de la deuxième feuille de verre, d'une couche d'émail, ladite zone émaillée comprenant une première zone (32) ayant la forme d'une bande périphérique et au moins une deuxième zone (34) ménageant au moins une fenêtre de transmission (36), puis
- bombage des première (1) et deuxième (2) feuilles de verre, de sorte à ce que la zone émaillée se trouve du côté concave de la feuille de verre qui la porte, puis
- feuilletage de la première (1) et de la deuxième (2) feuille de verre au moyen d'un intercalaire de feuilletage (4) de sorte à ce que la deuxième feuille de verre (2) se trouve du côté concave du vitrage, à ce que la face 2 (12) soit tournée vers ledit intercalaire de feuilletage (4) et à ce que la face 4 (22) soit opposée audit intercalaire de feuilletage (4).

14. Procédé selon la revendication précédente, dans lequel la couche d'émail est déposée par sérigraphie et/ou par impression numérique.

15. Procédé selon l'une des revendications 13 ou 14, dans lequel le dépôt de la couche d'émail est suivi d'une étape de pré-cuisson.

**Patentansprüche**

1. Gewölbte Verbundverglasung, insbesondere für eine Windschutzscheibe eines Kraftfahrzeugs, umfassend eine erste Glasscheibe (1), die an der konvexen Seite der Verglasung angeordnet und mittels einer Verbundzwischenlage (4) mit einer zweiten Glasscheibe (2) klebend verbunden ist, die an der konkaven Seite der Verglasung angeordnet ist, die erste Glasscheibe (1) umfassend eine Fläche (12), Fläche 2 genannt, die der Verbundzwischenlage zugewandt ist, und die zweite Glasscheibe (2) umfassend eine Fläche (22), Fläche 4 genannt, die der Verbundzwischenlage gegenüber liegt, wobei die Fläche 2 (12) oder die Fläche 4 (22) eine Zone umfasst, die mit einer Emailleschicht (3) bedeckt ist, emaillierte Zone (32, 34) genannt, die eine erste Zone (32), die die Form eines Umfangsstreifens aufweist, und eine zweite Zone (34), die mindestens ein Durchlassfenster (36) vorsieht, umfasst, wobei der lineare Wärmeausdehnungskoeffizient zwischen 20 und 300 °C (wie durch das in der Beschreibung beschriebene Verfahren bestimmt) der Emailleschicht in der zweiten Zone (34) in einem Bereich von $10,5.10^{-6}$/K bis $12,5.10^{-6}$/K liegt.

2. Verglasung nach dem vorstehenden Anspruch, wobei die Emailleschicht (3) schwarz und lichtundurchlässig ist, wobei ihre Klarheit L* gemessen in Reflexion auf der Glasseite vorzugsweise weniger als 10 beträgt.

**3.** Verglasung nach einem der vorstehenden Ansprüche, wobei die zweite Zone (34) zwischen 1 und 10 %, insbesondere zwischen 2 und 5 %, der Oberfläche der Fläche 2 (12) oder der Fläche 4 (22) darstellt.

**4.** Verglasung nach einem der vorstehenden Ansprüche, wobei die Oberfläche des Durchlassfensters (36) oder gegebenenfalls die Summe der Oberflächen von jedem Durchlassfenster (36) zwischen 5 und 300 $cm^2$, insbesondere zwischen 10 und 250 $cm^2$ liegt.

**5.** Verfahren nach einem der vorstehenden Ansprüche, wobei die Dicke der Emailleschicht (3) zwischen 5 und 50 $\mu$m, insbesondere zwischen 7 und 30 $\mu$m, liegt.

**6.** Verglasung nach einem der vorstehenden Ansprüche, wobei das Durchlassfenster (36) in einem oberen Mittelteil der Verglasung im Gebrauchszustand gelegen ist.

**7.** Verglasung nach einem der vorstehenden Ansprüche, wobei der lineare Wärmeausdehnungskoeffizient zwischen 20 und 300 °C der Emailleschicht (3) in der zweiten Zone (34) in einem Bereich von $11,0.10^{-6}$/K bis $12,0.10^{-6}$/K liegt.

**8.** Verglasung nach einem der vorstehenden Ansprüche, bei der der lineare Wärmeausdehnungskoeffizient zwischen 20 und 300 °C der Emailleschicht (3) in der ersten Zone (32) kleiner als der lineare Wärmeausdehnungskoeffizient zwischen 20 und 300 °C der Emailleschicht (3) in der zweiten Zone (34) ist.

**9.** Verglasung nach dem vorstehenden Anspruch, wobei der lineare Wärmeausdehnungskoeffizient zwischen 20 und 300 °C der Emailleschicht (3) in der ersten Zone (32) kleiner als $10,0.10^{-6}$/K ist.

**10.** Verglasung nach einem der Ansprüche 1 bis 7, wobei die Emailleschicht (3) den gleichen linearen Wärmeausdehnungskoeffizienten zwischen 20 und 300 °C in der gesamten emaillierten Zone (32, 34) aufweist.

**11.** Verglasung nach einem der vorstehenden Ansprüche, ferner umfassend mindestens einen Sensor (5), der gegenüber dem oder jedem Durchlassfenster (36) angeordnet ist.

**12.** Verglasung nach dem vorstehenden Anspruch, wobei der mindestens eine Sensor (5) eine Kamera oder ein Lidar ist.

**13.** Verfahren zum Erhalten einer gewölbten Verbundverglasung nach einem der vorstehenden Ansprüche, umfassend die folgenden Schritte:

- Bereitstellen einer ersten Glasscheibe (1) und einer zweiten Glasscheibe (2)
- Aufbringen, auf eine Zone, emaillierte Zone (32, 34) genannt, einer Fläche (12), Fläche 2 genannt, der ersten Glasscheibe oder einer Fläche (22), Fläche 4 genannt, der zweiten Glasscheibe, einer Emailleschicht, die emaillierte Zone umfassend eine erste Zone (32), die die Form eines Umfangsstreifens aufweist, und mindestens eine zweite Zone (34), die mindestens ein Durchlassfenster (36) vorsieht, dann
- Wölben der ersten (1) und der zweiten (2) Glasscheibe, so dass sich die emaillierte Zone auf der konkaven Seite der Glasscheibe befindet, die sie trägt, dann
- Laminieren der ersten (1) und der zweiten (2) Glasscheibe mittels einer Verbundzwischenlage (4), so dass sich die zweite Glasscheibe (2) auf der konkaven Seite der Verglasung befindet, so dass die Fläche 2 (12) der Verbundzwischenlage (4) zugewandt ist, und so dass die Fläche 4 (22) der Verbundzwischenlage (4) gegenüber liegt.

**14.** Verfahren nach dem vorstehenden Anspruch, wobei die Emailleschicht durch Siebdruck und/oder durch Digitaldruck aufgebracht wird.

**15.** Verfahren nach einem der Ansprüche 13 oder 14, wobei dem Aufbringen der Emailleschicht ein Voreinbrennschritt folgt.

**Claims**

**1.** A curved laminated glazing unit, especially for a motor vehicle windshield, comprising a first glass sheet (1) arranged on the convex side of the glazing unit and adhesively bonded by means of a lamination interlayer (4) to a second glass sheet (2) arranged on the concave side of the glazing unit, said first glass sheet (1) comprising a face (12) called face 2 turned toward said lamination interlayer and said second glass sheet (2) comprising a face (22) called face 4 opposite to said lamination interlayer, wherein said face 2 (12) or said face 4 (22) comprises a region covered with an enamel layer (3), referred to as enameled region (32, 34), which comprises a first region (32) having the shape of a peripheral strip and a second region (34) providing at least one transmission window (36), the coefficient of linear thermal expansion between 20 and 300°C (as determined by the method described in the description) of the enamel layer in said second region (34) being comprised in a range extending from $10.5.10^{-6}$/K to $12.5.10^{-6}$/K.

2. The glazing unit according to the preceding claim, such that the enamel layer (3) is black and opaque, its lightness L* measured in reflection on the glass side preferably being less than 10.

3. The glazing unit according to one of the preceding claims, wherein the second region (34) represents between 1 and 10%, especially between 2 and 5%, of the surface area of face 2 (12) or face 4 (22).

4. The glazing unit according to one of the preceding claims, wherein the surface area of the transmission window (36), or where appropriate the sum of the surface areas of each transmission window (36) is between 5 and 300 cm$^2$, especially between 10 and 250 cm$^2$.

5. The glazing unit according to one of the preceding claims, wherein the thickness of the enamel layer (3) is between 5 and 50 $\mu$m, especially between 7 and 30 $\mu$m.

6. The glazing unit according to one of the preceding claims, wherein the transmission window (36) is located in an upper central part of the glazing unit in the usage situation.

7. The glazing unit according to one of the preceding claims, wherein the coefficient of linear thermal expansion between 20 and 300°C of the enamel layer (3) in the second region (34) is within a range extending from $11.0.10^{-6}$/K to $12.0.10^{-6}$/K.

8. The glazing unit according to one of the preceding claims, wherein the coefficient of linear thermal expansion between 20 and 300°C of the enamel layer (3) in the first region (32) is less than the coefficient of linear thermal expansion between 20 and 300°C of the enamel layer (3) in the second region (34).

9. The glazing unit according to the preceding claim, wherein the coefficient of linear thermal expansion between 20 and 300°C of the enamel layer (3) in the first region (32) is less than $10.0.10^{-6}$/K.

10. The glazing unit according to one of claims 1 to 7, wherein the enamel layer (3) has the same coefficient of linear thermal expansion between 20 and 300°C throughout the enameled region (32, 34).

11. The glazing unit according to one of the preceding claims, further comprising at least one sensor (5) arranged facing the or each transmission window (36).

12. The glazing unit according to the preceding claim, wherein the at least one sensor (5) is a camera or a LiDAR.

13. A method for obtaining a curved laminated glazing unit according to one of the preceding claims, comprising the following steps:

   - providing a first glass sheet (1) and a second glass sheet (2)
   - depositing, on a region, called enameled region (32, 34), a face (12) called face 2 of the first glass sheet or of a face (22) called face 4 of the second glass sheet, a layer of enamel, said enameled region comprising a first region (32) having the shape of a peripheral strip and at least one second region (34) providing at least one transmission window (36), then
   - bending the first (1) and second (2) glass sheets, so that the enameled region is located on the concave side of the glass sheet which bears it, then
   - laminating the first (1) and second (2) glass sheet by means of a lamination interlayer (4) so that the second glass sheet (2) is located on the concave side of the glazing unit, so that face 2 (12) is turned toward said lamination interlayer (4) and so that face 4 (22) is opposite said lamination interlayer (4).

14. The method according to the preceding claim, wherein the enamel layer is deposited by screen printing and/or by digital printing.

**15.** The method according to one of claims 13 or 14, wherein the deposition of the enamel layer is followed by a pre-firing step.

[Fig. 1]

**EP 4 419 327 B1**

## RÉFÉRENCES CITÉES DANS LA DESCRIPTION

**Documents brevets cités dans la description**

- WO 2019147605 A1